# EUROPÄISCHE PATENTSCHRIFT

(11) **EP 2 861 384 B1**
(45) Veröffentlichungstag und Bekanntmachung des Hinweises auf die Patenterteilung: **13.04.2016**
(21) Anmeldenummer: 13725957.8
(22) Anmeldetag: 29.05.2013
(51) Int. Cl.: B25F 5/02

(54) **HANDWERKZEUGMASCHINE**
HAND MACHINE TOOL
MACHINE-OUTIL À MAIN

(30) Priorität: 13.06.2012 DE 102012209925
(43) Veröffentlichungstag der Anmeldung: 22.04.2015
(73) Patentinhaber: Hilti Aktiengesellschaft, 9494 Schaan (LI)
(72) Erfinder: BURGER, Helmut, 86931 Prittriching (DE); THANNER, Thomas, 81243 München (DE); RICHTER, Rene, 86179 Augsburg (DE)
(74) Vertreter: Hilti Aktiengesellschaft Corporate Intellectual Property
(86) Internationale Anmeldenummer: PCT/EP2013/061009
(87) Internationale Veröffentlichungsnummer: WO 2013/186047

(56) Entgegenhaltungen:
- EP-A1- 1 787 760
- EP-A1- 1 787 764
- EP-A2- 2 223 779
- WO-A2-2010/002776
- DE-A1- 4 344 635
- DE-A1-102008 054 639
- JP-A- 2003 297 312
- US-B1- 6 551 123

## Beschreibung

### GEBIET DER ERFINDUNG

Die vorliegende Erfindung betrifft eine handgehaltene Werkzeugmaschine, z.B. einen Bohrhammer, eine Säge, ein Setzgerät für Nägel. Eine Versorgung elektrischer Verbraucher der handgehaltenen Werkzeugmaschine, insbesondere eines Elektromotors, erfolgt durch ein Batteriepaket. Das Batteriepaket ist von der Handwerkzeugmaschine abnehmbar. Das Batteriepaket kann dann in ein Ladegerät zum Aufladen eingesetzt oder durch ein baugleiches geladenes Batteriepaket ausgetauscht werden. Zum Beispiel offenbart EP 2 223 779 A2 ein tragbares, handgeführtes Elektrogerät mit einem Alsbar.

Ein Bohrhammer erzeugt starke Vibrationen, welche eine Halterung und die elektrischen Kontakte des Batteriepakets beanspruchen. Die elektrischen Kontakte unterliegen dabei nicht nur einem mechanischen Verschleiß sondern auch aufgrund von Lichtbögen, welche beim Öffnen und Schließen der Kontakte entstehen.

### OFFENBARUNG DER ERFINDUNG

Die erfindungsgemäße Handwerkzeugmaschine hat ein integriertes Werkzeug oder eine Werkzeugaufnahme zum Aufnehmen eines Werkzeugs. Ein Elektromotor dient zum Antreiben des Werkzeugs oder der Werkzeugaufnahme. In eine Führung ist längs einer ersten Richtung ein Batteriepaket zur Stromversorgung des Elektromotors einschiebbar. In einem Kontakthalter sind mehrere elektrische Kontakte zum Kontaktieren von Gegenkontakten des Batteriepakets angeordnet. Litzen, die mit jeweils einem der elektrischen Kontakte verbunden sind, haben Adern, die angrenzend an den elektrischen Kontakt einen längs der ersten Richtung wellenförmigen Verlauf aufweisen.

Die Adern können beispielsweise miteinander zu einer Litze verflochten sein, wodurch sich der wellenförmige Verlauf ergibt. Alternativ oder zusätzlich kann die gesamte Litze wellenförmig in dem Kontakthalter angeordnet sein. Bezogen auf eine zu der ersten Richtung parallel verlaufenden Achse ändert sich der Abstand der Litze zu der Achse wiederholt, vorzugsweise periodisch, entlang ihres Verlaus längs der Achse. Die Wellenform kann beispielsweise sinusförmig, sägezahnförmig sein.

Eine Ausgestaltung sieht vor, dass der Kontakthalter eine Klemmleiste aufweist, und jeweils ein Ende einer Litze in der Klemmleiste und ein anderes Ende der Litze an einem der Kontakte befestigt sind. Die Litze und der an der Litze hängende elektrische Kontakt sind mechanisch von dem weiteren Kabelstrang innerhalb der Handwerkzeugmaschine entkoppelt. Die von dem äußeren Kabelstrang eingeleiteten Kräfte werden von der Klemmleiste auf den Kontakthalter abgeleitet.

Eine Ausgestaltung sieht vor, dass eine Länge der Litze größer als ein Abstand der Klemmleiste von dem einen Kontakt ist. Die Litze ist innerhalb des Kontakthalters nicht gestreckt. Die Litze ist dadurch weicher gegenüber einem Längsverschub des elektrischen Kontakts und kann den Längsverschub federnd aufnehmen.

Eine Ausgestaltung sieht vor, dass die Litze zwischen der Klemmleiste und dem Kontakt ohne Isolationsschlauch ist. Die rein aus metallischen Adern gebildete Litze erweist sich für Bewegungen im Submillimeterbereich stärker dämpfend als die üblicherweise mit einem Schrumpfschlauch isolierten Litzen. Vorzugsweise sind die elektrischen Kontakte in dem Kontakthalter beweglich gelagert.

Der Kontakthalter ist vorzugsweise in einer Aufhängung der Handwerkzeugmaschine längs der ersten Richtung und längs einer dritten Richtung gegenüber der Handwerkzeugmaschine beweglich aufgehängt. Eine Feder beaufschlagt den Kontakthalter entgegen der ersten Richtung mit einer Kraft. Eine entgegen der ersten Richtung weisende Stirnseite ist mit einer Zentrierung versehen, die mit einer Zentrierstütze an dem Batteriepaket zusammenwirkt, um eine Relativbewegung zwischen der Stirnseite und dem Batteriepaket längs der dritten Richtung zu unterbinden. Der Kontakthalter legt sich an das Batteriepaket an, wodurch eine Relativbewegung der Kontakte der Handwerkzeugmaschine und der Gegenkontakte des Batteriepakets im Millimeterbereich unterbunden sind.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: einen Querschnitt durch den Bohrhammer in der Ebene II-II
- Fig. 3: einen Querschnitt durch den Bohrhammer in der Ebene III-III
- Fig. 4: einen Teilschnitt durch eine Aufhängung
- Fig. 5: eine Aufsicht auf einen Kontakthalter
- Fig. 6: einen Querschnitt durch den Bohrhammer in der Ebene V-V
- Fig. 7: einen Bohrhammer
- Fig. 8: einen Querschnitt durch den Bohrhammer in der Ebene VII-VII

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

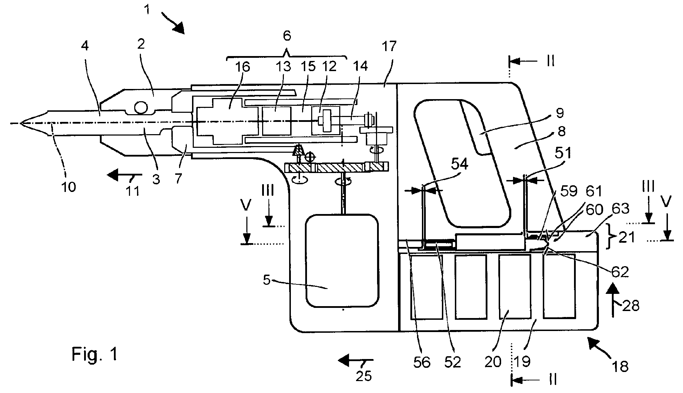

Fig. 1 zeigt als Beispiel einer Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrmeißels **4,** eingesetzt werden kann. Einen primären Antrieb des Bohrhammers **1** bildet ein Elektromotor **5,** welcher ein Schlagwerk **6** und eine Abtriebswelle **7** antreibt. Ein Anwender kann den Bohrhammer **1** mittels eines Handgriffs **8** führen und mittels eines Systemschalters **9** den Bohrhammer **1** in Betrieb nehmen. Im Betrieb dreht der Bohrhammer 1 den Bohrmeißel **4** kontinuierlich um eine Arbeitsachse **10** und kann dabei den Bohrmeißel **4** in Schlagrichtung **11** längs der Arbeitsachse **10** in einen Untergrund schlagen.

Das Schlagwerk **6** ist beispielsweise ein pneumatisches Schlagwerk **6.** Ein Erreger **12** und ein Schläger **13** sind in dem Schlagwerk **6** längs der Arbeitsachse **10** beweglich geführt. Der Erreger **12** ist über einen Exzenter **14** oder einen Taumelfinger an den Motor **5** angekoppelt und zu einer periodischen, linearen Bewegung gezwungen. Eine Luftfeder gebildet durch eine pneumatische Kammer **15** zwischen Erreger **12** und Schläger **13** koppelt eine Bewegung des Schlägers **13** an die Bewegung des Erregers **12** an. Der Schläger **13** kann direkt auf ein hinteres Ende des Bohrmeißels **4** aufschlagen oder mittelbar über einen im Wesentlichen ruhenden Zwischenschläger **16** einen Teil seines Impuls auf den Bohrmeißel **4** übertragen. Das Schlagwerk **6** und vorzugsweise die weiteren Antriebskomponenten sind innerhalb eines Maschinengehäuses **17** angeordnet.

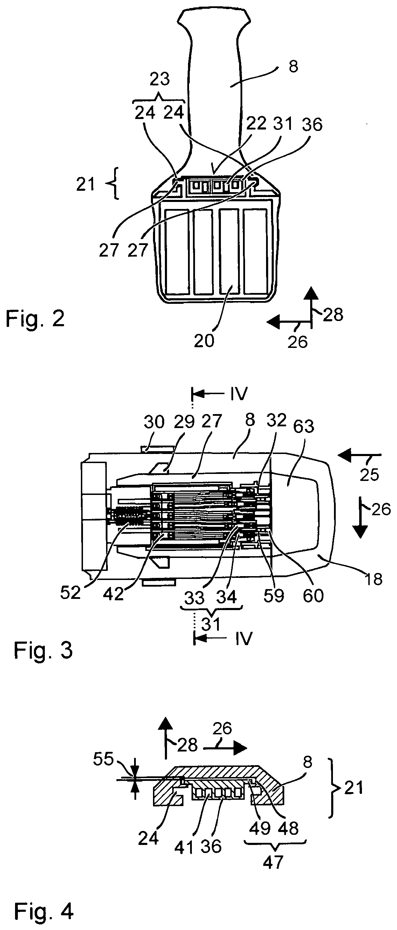

Die Stromversorgung des Elektromotors **5** erfolgt durch ein Batteriepaket **18.** Das Batteriepaket **18** hat ein gegenüber dem Bohrhammer **1** getrenntes Batteriegehäuse **19,** in welchem mehrere Batteriezellen **20** angeordnet sind. Das Batteriepaket **18** kann in eine Halterung **21** des Bohrhammers **1** eingesetzt und herausgenommen werden. Die Halterung **21** ist vorzugsweise an einer im wesentlichen außenliegenden Fläche **22** des Maschinengehäuses **17** oder des Handgriffs **8** ausgebildet. Die Halterung **21** hat eine Führung **23** aus beispielsweise zwei parallelen Nuten **24,** welche längs einer Einschubrichtung **25** orientiert sind und zueinander versetzt in einer zweiten (horizontalen) Richtung **26** liegen (Fig. 2). Das Batteriegehäuse **19** des Batteriepakets **18** ist mit zwei parallelen Schienen **27** mit einem L-förmigen Profil versehen. Das Batteriegehäuse **19** kann mit seinen Schienen **27** in die Nuten **24** der Führung **23** eingesetzt und längs der von der Führung **23** vorgegebenen Einschubrichtung **25** eingeschoben werden. Die Führung 23 und das Batteriegehäuse **19** hintergreifen einander wechselseitig entlang einer dritten (vertikalen) Richtung **28.** Das Batteriepaket **18** ist durch die Führung **23** in den zu der Einschubrichtung **25** orthogonalen Richtungen **26, 28** vorzugsweise ohne oder geringem Spiel gehaltert.

Die Halterung **21** ist mit senkrecht zu der Führung **23** orientierten Vertiefungen versehen, in die Verriegelungszapfen **29** des Batteriepakets **18** eingreifen können (Fig. 3). Die Verriegelungszapfen **29** sind vorzugsweise mit Federn vorgespannt und schnappen ein, sobald das Batteriepaket **18** bis zu einem Anschlag in die Halterung **21** eingesetzt ist. Die Verriegelungszapfen **29** verriegeln das Batteriepaket **18** gegen eine Bewegung längs der Einschubrichtung **25.** Der Anwender kann die Verriegelungszapfen **29** durch Betätigen eines Druckknopfs **30** aus dem Eingriff mit der Halterung 21 nehmen, um das Batteriepaket **18** aus der Halterung **21** entgegen der Einschubrichtung **25** ziehen zu können. Der Aufbau der Führung **23** ist nur beispielhaft, insbesondere kann die Halterung **21** mit den Verriegelungszapfen **29** und/oder die Halterung **21** mit Schienen **27** eines L-förmigen Profils versehen sein.

Die Halterung **21** ist mit elektrischen Kontakten **31** versehen, welche elektrische Gegenkontakte **32** des Batteriepakets **18** kontaktieren. Der Kontakt ist hergestellt, wenn das Batteriepaket **18** in der Führung **23** verriegelt ist. Die Kontakte **31** liegen vorzugsweise nebeneinander längs der zweiten Richtung **26** und ansonsten vorzugsweise auf gleicher Höhe insbesondere entlang der dritten Richtung **28.**

Zweckmäßigerweise sind zwei stromführende Kontakte **33** und zwei oder mehr signalführende Kontakte **34** vorgesehen. Die stromführenden Kontakte **33** sind für mehr als 10 Ampere ausgelegt, um den Bohrhammer **1** mit Strom zu versorgen. Die Kontakte **31** bestehen vollständig aus Metall, angesichts der mechanischen Belastungen bei einem Bohrhammer **1** aus Eisen, Kupfer oder eisenhaltigen Kupfer Legierungen. Die signalführenden Kontakte **34** sind für eine geringere Last ausgelegt, da über diese nur Ströme von weniger als 10 mA fließen.

Die elektrischen Kontakte **31** des Bohrhammers **1** sind geschlitzte Buchsen. Die gegenüberliegenden Backen **35** des Kontakts **31** können federnd ausgebildet sein. Vorzugsweise werden beim Einschieben der elektrischen Gegenkontakte **32** des Batteriepakets **18** zwischen die Backen **35** diese federnden Backen **35** auseinandergedrückt und somit an die Gegenkontakte **32** angeklemmt. Die elektrischen Kontakte **32** des Batteriepakets **18** können als Schwerter ausgebildet sein. Die Schlitze bzw. Schwerter verlaufen vorzugsweise parallel zu der vertikalen, dritten Richtung **28.**

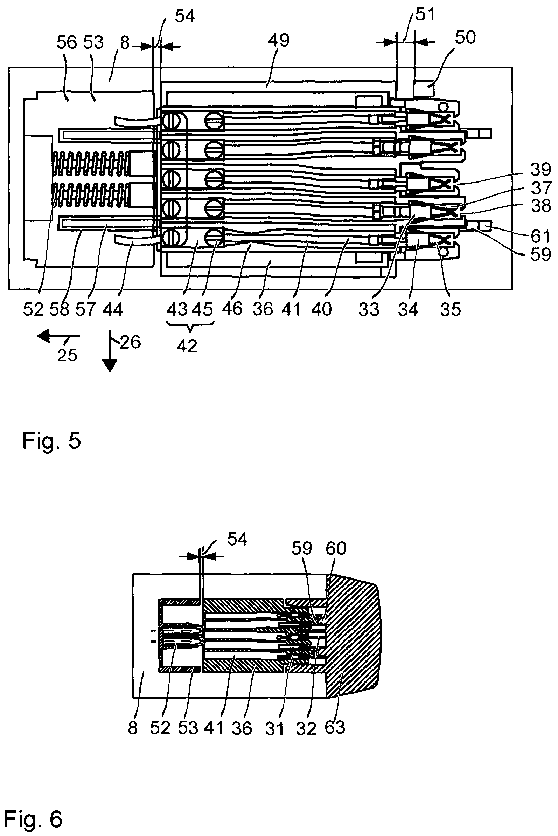

Die elektrischen Kontakte **31** sind in einen elektrisch isolierenden Kontakthalter **36** eingesetzt (Fig. 5). Die Kontakte **31** liegen nebeneinander und sind in der zweiten Richtung **26** zueinander beabstandet. Der Kontakthalter **36** hat für vorzugsweise jeden der elektrischen Kontakte **31,** insbesondere der stromführenden Kontakte **33,** einen getrennten Aufnahmeraum **37.** Der elektrische Kontakt **31** kann sich in dem Aufnahmeraum **37** längs der Einschubrichtung **25** bewegen, das Spiel liegt beispielsweise im Bereich von 0,1 mm bis 0,3 mm. Die elektrischen Kontakte **31** können in die zweite Richtung **26** vorstehende gefederte Flügel aufweisen, mit welchen sich die elektrische Kontakte **31** an den Seitenwänden der Aufnahmeräume **37** abstützten. Die Kontakte **31** sind aufgrund ihrer beweglichen Anordnung innerhalb des Kontakthalters **36** zueinander beweglich. Die Aufnahmeräume **37** sind an einer entgegen der Einschubrichtung **25** weisenden vorderen Stirnseite **38** offen. Die Gegenkontakte **32** des Batteriepakets **18** können durch die Öffnung **39** in die Aufnahmeräume **37** und zu den darin angeordneten elektrischen Kontakten **31** eingeschoben werden.

An jedem der Kontakte **31** ist eine Litze **40** angeklemmt oder mit dem elektrischen Kontakt **32** geklemmt (Fig. 5). Die Litzen **40** sind in dem Kontakthalter **36** in jeweils einem Kanal **41** geführt. Bei der dargestellten Ausführungsform ist eine Klemmleiste **42** in dem Kontakthalter **36** vorgesehen. Die Litzen **40** sind an ihrem einem Ende an einem der Kontakte **31** und ihrem anderen Ende in der Klemmleiste **42** befestigt. Die Klemmleiste **42** entkoppelt die Litzen **40** mechanisch von der Verdrahtung innerhalb des Bohrhammers **1.** Hierdurch wird insbesondere eine Übertragung von Torsionskräften der beim Verlegen teilweise verdrillter Leitungen auf die Litzen **40** unterbunden. Die Torisionskräfte könnten sonst zu einem Anklemmen der Kontakte **32** an Seitenwänden der Aufnahmeräume **37** führen. Die Litzen **40** sind aus geflochtenen Adern zusammengesetzt. Die zu einem Zopf geflochtenen Litzen **40** sind vorzugsweise für wenigstens 2 cm innerhalb des Kontakthalters **36** ohne isolierenden Kunststoffmantel. Der Zopf lässt sich durch die eingeleiteten Torsionskräfte verformen und entkoppelt diese somit von den Kontakten **31.** Mit einem Schrumpfschlauch isolierte Litzen oder Litzen mit verdrillten Adern erweisen sich hierbei als ungünstig, selbst Litzen mit sehr feinen Adern.

Die Klemmleiste **42** ist beispielsweise an dem der Stirnseite **38** abgewandten Ende des Kontakthalters **36** angeordnet. Die Klemmleiste **42** kann mit elektromechanischen Kopplungsstücken **43** versehen sein. Das Kopplungsstück **43** verbindet die Litze **40** mit einem anderen Kabel **44,** welche in das Maschinengehäuse **17** geführt ist. Das Kopplungsstück **43** ist beispielsweise als eine Lüsterklemme mit zwei Schrauben **45** zum Fixieren der Litze **40** und des Kabels **44** ausgebildet. Die Kopplungsstücke **43** sind in dem Kontakthalter **36** unbeweglich eingesetzt. Die Klemmleiste **42** kann alternativ oder zusätzlich zu den Kopplungsstücken **43** in dem Kanal **41** eine Einschnürung **46** aufweisen, in welcher die Litze **40** gequetscht ist.

Der Kontakthalter **36** ist gegenüber dem Maschinengehäuse **17** beweglich aufgehängt. Eine Aufhängung **47** des Kontakthalters **36** ermöglicht eine begrenzte Bewegung des Kontakthalters **36** längs der Einschubrichtung **25.** Die Aufhängung **47** kann dazu beispielsweise Längsnuten **48** in dem Maschinengehäuse **17** aufweisen, in welche Führungsschienen **49** an dem Kontakthalter **36** eingreifen (Fig. 4). Anschläge **50, 53** auf beiden Seiten des Kontakthalters 36 begrenzen die Bewegung auf eine Wegstrecke 51, 54 von insgesamt beispielsweise 2 mm bis 5 mm. Eine oder mehrere Federn **52,** z.B. Schraubenfedern, beaufschlagen den Kontakthalter **36** entgegen der Einschubrichtung **25.** Sofern das Batteriepaket **18** nicht eingesetzt ist, drücken die Federn **52** den Kontakthalter **36** an den in Einschubrichtung **25** vorderen Anschlag **50.** Die Federn **52** sind unter Vorspannung eingesetzt. Beim Einschieben des Batteriepakets **18** wird der Kontakthalter **36** von dem Batteriepaket **18** gegen die Kraft der Federn 52 in Einschubrichtung 25 mitgenommen. Die Wegstrecke 51, 54 ist derart bemessen, dass wenn die Verriegelung 29 das Batteriepaket 18 arretiert, der Kontakthalter **36** noch von dem in Einschubrichtung **25** hinteren Anschlag **53** durch einen Teil 54 der Wegstrecke 51, 54 beabstandet ist.

Der Kontakthalter **36** kann sich in der Aufhängung **47** auch längs der zweiten Richtung **26** etwas bewegen, im Gegensatz zu dem Batteriepaket **18** in der Halterung **21.** Der Freiraum für die Bewegung beträgt vorzugsweise wenigstens 1 mm in die zweite Richtung **26.** Der Abstand der gegenüberliegenden Längsnuten **48** ist um den Freiraum größer als die Breite des Kontakthalters **36** im Bereich der Führungsschienen **49.**

Ferner kann der Kontakthalter **36** sich entlang der dritten Richtung **28** frei zwischen vertikalen Anschlägen bewegen. Die freie Wegstrecke 55 zwischen den Anschlägen liegt im Bereich von 0,5 mm bis 2 mm. Die vertikalen Anschläge sind beispielsweise durch Nutwände der Längsnuten **48** gebildet, deren Abstand um die Wegstrecke 55 größer als die Abmessung Führungsschienen **49** längs der vertikalen Richtung **28** ist.

Der bewegliche Kontakthalter **36** kann alternativ oder zusätzlich in einem mit dem Handgriff **8** oder Maschinengehäuse **17** befestigten Bock **56** aufgehängt sein. Der Bock **56** ist in Einschubrichtung **25** hinter dem Kontakthalter **36** angeordnet. Der Kontakthalter **36** hat ein oder mehrere in Einschubrichtung **25** vorspringende Stifte **57,** welche in Buchsen **58** des Bocks **56** eingesetzt sind. Die Buchsen **58** sind breiter und höher als die Stifte **57,** um die Beweglichkeit des Kontakthalters **36** in die zweite Richtung **26** und dritte Richtung **28** zu gewährleisten. Die Federn **52** können in dem Bock **56** gelagert sein und sich an dem Bock **56** abstützen. Der Bock **56** bildet den hinteren Anschlag **53.** Die Litzen **40** oder Kabel **44** können in dem Bock **56** im Wesentlichen parallel zu der Einschubrichtung **25** geführt sein.

Der Kontakthalter **36** ist mit einer vertikalen Zentrierung **59** an der vorderen Stirnseite **38** versehen. Die vertikale, d.h. entlang der dritten Richtung **28,** wirkende Zentrierung **59** greift in eine komplementäre Zentrierstütze **60** an dem Batteriepaket **18** ein. Die Federn **52** drücken die Zentrierung **59** in die Zentrierstütze **60** und fixieren kraft- und formschlüssig die relative vertikale Position der vorderen Stirnseite **38** gegenüber dem Batteriepaket **18.** Die vordere Stirnseite **38** und die Halterung **21** bleiben dabei weiterhin gegenüber dem Maschinengehäuse **17** und dem Bohrhammer **1** beweglich. Die vordere Stirnseite **38** kann sich gegenüber dem Maschinengehäuse **17** um die freie Wegstrecke **55** entlang der vertikalen dritten Richtung **28** bewegen. Die Zentrierung **59** ist längs der Einschubrichtung **25** derart bemessen, dass nur die Zentrierung **59** an dem Batteriepaket **18** anliegt. Die verbleibenden Bereiche des Kontakthalters **36** sind längs der Einschubrichtung **25** beabstandet. Die Kontakte **31, 32** berühren einander oder sind ineinander eingesteckt.

Die beispielhaft dargestellte Zentrierung **59** ist mittels von der Stirnseite **38** vorspringenden Dornen **59** realisiert. Die Dorne **59** sind keilförmig, pyramidenförmig oder kegelförmig. Eine zum Maschinengehäuse **17** weisende obere Fläche **61** des Dorns **59** ist gegenüber der dritten Richtung **28** geneigt. Die obere Fläche **61** entfernt sich entgegen der Einschubrichtung **25** längs der dritten Richtung **28** von dem Maschinengehäuse **17.** Eine untere Fläche **62,** die von dem Maschinengehäuse **17** abgewandt ist, kann alternativ oder zusätzlich zu der oberen Fläche **61** gegenüber der dritten Richtung **28** geneigt sein. Die untere Fläche **62** steigt entgegen der Einschubrichtung **25** längs der dritten Richtung **28** zu der Maschinengehäuse **17** an. Die Dorne **59** sind vorzugsweise längs der zweiten Richtung **26** zwischen den Kontakten **32** angeordnet. In dem bevorzugten Beispiel grenzen die Dorne **59** unmittelbar an die Aufnahmeräume **37** der stromführenden Kontakte **33** an.

Das Batteriepaket **18** hat einen Kontaktträger **63,** der vorzugsweise unbeweglich mit dem Batteriegehäuse **19** verbunden ist. Der Kontaktträger **63** ist aus einem elektrisch isolierendem Material, bspw. einem Kunststoff. In den Kunststoff sind die Gegenkontakte **32** unbeweglich eingebettet. Die Gegenkontakte **32** sind vorzugsweise als Schwerter ausgebildet, die in Ebenen parallel zu der Einschubrichtung **25** und der dritten Richtung **28** liegen. Die Zentrierstütze **60** ist beispielsweise zwischen den Gegenkontakten **32** angeordnet. Die in Einschubrichtung **25** weisende Stirnfläche **64** der Zentrierstütze **60** ist mit einer Kerbe versehen, die in der Form komplementär zu dem Dorn **59** ausgebildet ist. Die Kerbe ist vorzugsweise prismatisch ausgebildet, d.h. der Querschnitt der Kerbe ist längs der zweiten Richtung **26** konstant. Die Zentrierung **59** wirkt somit nur in die dritte Richtung **28** und nimmt keinen Einfluss auf eine Bewegung längs der zweiten Richtung **26.**

Die Anordnung der Zentrierung **59** und der Zentrierstütze **60** unmittelbar neben den stromführenden Kontakten **33** bzw. Gegenkontakten **32** erweist sich selbst bei steifen Materialien für den Kontakthalter **36** und den Kontaktträger **63** als vorteilhaft, um eine Relativbewegung längs der dritten Richtung **28** zwischen den stromführenden Kontakten **33** und Gegenkontakten **32** ausreichend zu unterdrücken.

Die Zentrierung **59** an der Stirnseite **38** des Kontakthalters **36** kann als Kerbe und die Zentrierstütze als Dorn ausgebildet sein. Ferner kann die Zentrierung sowohl Kerben und Dorne aufweisen, wobei die Zentrierstützen entsprechend komplementär ausgebildet sind.

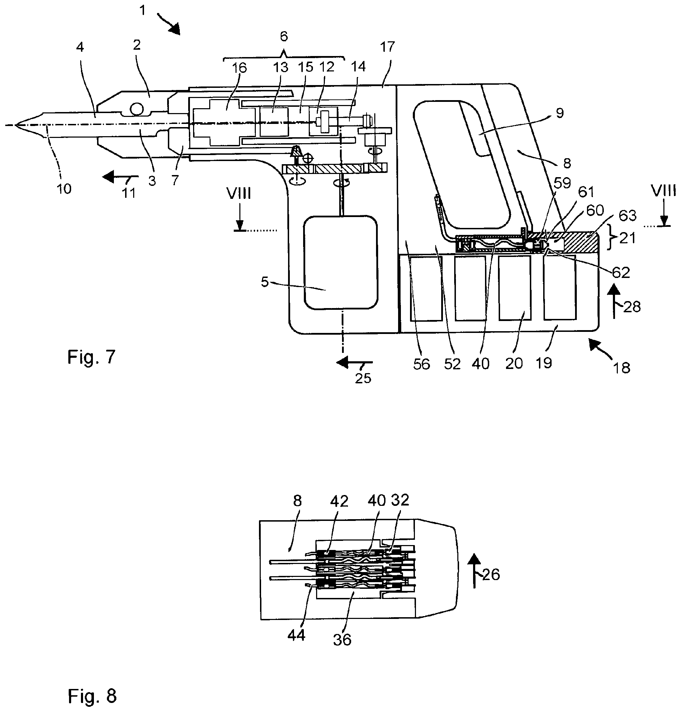

Die Litze **40** kann in dem Kanal **41** wellenförmig eingelegt sein (Fig. 7, Fig. 8). Der Kanal **41** hat eine um wenigstens 50 % größere Abmessung in der zweiten Richtung **26** verglichen zu dem Querschnitt der Litze **40.** Die Litze **40** verläuft zwischen der Klemmleiste **42** und den Kontakten **31.** Die Länge der Litze **40** ist jedoch um wenigstens 10 % größer als der Abstand von Klemmleiste **42** und den Kontakten **31.** Die Litzen **40** ändern längs der Einschubrichtung **25** mehrfach ihre Verlaufsrichtung bezogen auf die zweite Richtung **26** oder die dritte Richtung **28.** Hierdurch konnte eine effektive Dämpfung von Bewegungen im Submillimeterbereich der Kontakte erreicht werden. Die Adern der Litze 40 können zu einem Zopf geflochten sein.

Der Bohrhammer **1** ist neben einem Meißelhammer, einem Setzgerät für Nägel und Bolzen und einer Säbelsäge ein Beispiel für eine batteriegespeiste elektrische Handwerkzeugmaschine, die im Betrieb starken Vibrationen ausgesetzt ist, und mit dem beweglichen Kontakthalter **36** versehen sein kann. Das Setzgerät erzeugt durch den als Werkzeug auf die Nägel aufschlagenden Schlagbolzen Stöße, die zu einer Relativbewegung von Batteriepaket und Maschinengehäuse führen können. Bei Sägen, insbesondere Säbelsägen werden die Vibrationen durch das Sägeblatt erzeugt und auf die Werkzeugmaschine übertragen.

## Patentansprüche

1. Handwerkzeugmaschine mit
einem integrierten Werkzeug oder einer Werkzeugaufnahme (2) zum Aufnehmen eines Werkzeugs (4),
einem Elektromotor (5) zum Antreiben des Werkzeugs (4) oder der Werkzeugaufnahme (2),
einer Führung (23), in die längs einer ersten Richtung ein Batteriepaket (18) zur Stromversorgung des Elektromotors (5) einschiebbar ist,
einem Kontakthalter (36), in dem mehrere elektrische Kontakte (31) zum Kontaktieren von Gegenkontakten (32) des Batteriepakets (18) angeordnet sind, **dadurch gekennzeichnet, dass**
wenigstens eine Litze (40), die mit einem der elektrischen Kontakte (31) verbunden ist, Adern hat, die angrenzend an den elektrischen Kontakt (32) einen längs der ersten
Richtung (28) wellenförmigen Verlauf aufweisen.

2. Handwerkzeugmaschine nach Anspruch 1, **dadurch gekennzeichnet, dass** die Adern der Litze (40) geflochten sind.

3. Handwerkzeugmaschine nach Anspruch 1 oder 2, **dadurch gekennzeichnet, dass**, die gesamte Litze (40) einen wellenförmigen Verlauf angrenzend an den elektrischen Kontakt (32) aufweist.

4. Handwerkzeugmaschine nach einem der vorhergehenden Ansprüche, **dadurch gekennzeichnet, dass** der Kontakthalter (36) eine Klemmleiste (42) aufweist, und jeweils ein Ende einer Litze (40) in der Klemmleiste (42) und ein anderes Ende der Litze (40) an einem der Kontakte (31) befestigt sind.

5. Handwerkzeugmaschine nach Anspruch 4, **dadurch gekennzeichnet, dass** eine Länge der Litze (40) größer als ein Abstand der Klemmleiste (42) von dem einen Kontakt (31) ist.

6. Handwerkzeugmaschine nach Anspruch 4 oder 5, **dadurch gekennzeichnet, dass** die Litze (40) zwischen der Klemmleiste (42) und dem Kontakt (31) ohne Isolationsschlauch ist.

7. Handwerkzeugmaschine nach einem der vorhergehenden Ansprüche, **dadurch gekennzeichnet, dass** die elektrischen Kontakte (31) in dem Kontakthalter (36) beweglich gelagert sind.

## Claims

1. Hand-held power tool comprising
an integrated tool or a tool holder (2) for receiving a tool (4),
an electric motor (5) for driving the tool (4) or the tool holder (2),
a guide (23) into which a battery pack (18) for supplying the electric motor (5) with power can be inserted in a first direction and
a contact holder (36) in which several electrical contacts (31) for contacting mating contacts (32) of the battery pack (18) are arranged,
**characterised in that**
at least one stranded wire (40) connected to one of the electrical contacts (31) has strands extending in a wave-like manner in the first direction (28) adjacent to the electrical contact (32).

2. Hand-held power tool according to claim 1, **characterised in that** the strands of the stranded wire (40) are braided.

3. Hand-held power tool according to claim 1 or claim 2, **characterised in that** the entire stranded wire (40) extends in a wave-like manner adjacent to the electrical contact (32).

4. Hand-held power tool according to one of the preceding claims, **characterised in that** the contact holder (36) has a terminal strip (42), one end of each stranded wire (40) being fixed in the terminal strip (42) and the other end of each stranded wire (40) being fixed to one of the contacts (31).

5. Hand-held power tool according to claim 4, **characterised in that** the length of the stranded wire (40) is greater than the distance of the terminal strip (42) from the one contact (31).

6. Hand-held power tool according to claim 4 or claim 5, **characterised in that** the stranded wire (40) has no insulating sleeve between the terminal strip (42) and the contact (31).

7. Hand-held power tool according to one of the preceding claims, **characterised in that** the electrical contacts (31) are movably supported in the contact holder (36).

## Revendications

1. Machine-outil à main comportant :
un outil intégré ou un porte-outil (2) pour recevoir un outil (4),
un moteur électrique (5) pour entraîner l'outil (4) ou le porte-outil (2),
un guide (23) dans lequel un bloc de batterie (18) peut être inséré le long d'une première direction pour alimenter le moteur électrique (5) en courant,
un porte-contact (36) dans lequel plusieurs contacts électriques (31) sont agencés pour être au contact de contacts complémentaires (32) du bloc de batterie (18),
**caractérisée en ce qu'**au moins un toron (40) qui est relié à l'un des contacts électriques (31), a des fils ayant une forme ondulée le long de la première direction (28), au voisinage du contact électrique (32).

2. Machine-outil à main selon la revendication 1, **caractérisée en ce que** les fils du toron (40) sont torsadés.

3. Machine-outil à main selon la revendication 1 ou 2, **caractérisée en ce que** le toron complet (40) a une forme ondulée au voisinage du contact électrique (32).

4. Machine-outil à main selon l'une des revendications précédentes, **caractérisée en ce que** le porte-contact (36) comporte un bornier (42), et **en ce qu'**une extrémité d'un toron (40) et une autre extrémité du toron (40) sont fixées dans le bornier (42) et à l'un des contacts (31), respectivement.

5. Machine-outil à main selon la revendication 4, **caractérisée en ce qu'**une longueur du toron (40) est plus grande qu'une distance du bornier (42) au contact (31).

6. Machine-outil à main selon la revendication 4 ou 5, **caractérisée en ce que** le toron (40) est sans tube isolant entre le bornier (42) et le contact (31).

7. Machine-outil à main selon l'une des revendications précédentes, **caractérisée en ce que** les contacts électriques (31) sont montés de manière mobile dans le porte-contact (36).
